**Europäisches Patentamt**

**European Patent Office**

**Office européen des brevets**

(19)

(11) Numéro de publication: **0 068 973**
**B1**

(12) ## FASCICULE DE BREVET EUROPEEN

(45) Date de publication du fascicule du brevet:
29.08.84

(51) Int. Cl.³: **C 04 B 35/46, H 01 G 4/12,**
**H 01 B 3/12**

(21) Numéro de dépôt: **82401090.4**

(22) Date de dépôt: **15.06.82**

(54) Composition céramique diélectrique à base de titanate de baryum, et condensateur haute tension utilisant une telle composition.

(30) Priorité: **30.06.81 FR 8112838**

(43) Date de publication de la demande:
**05.01.83 Bulletin 83/1**

(45) Mention de la délivrance du brevet:
**29.08.84 Bulletin 84/35**

(84) Etats contractants désignés:
**DE GB IT**

(56) Documents cités:
**US - A - 3 775 142**

**CHEMICAL ABSTRACTS, vol. 85, no. 12, 20 septembre 1976, page 573, no. 86236w, Columbus Ohio (USA);**
**CHEMICAL ABSTRACTS, vol. 85, no. 14, 4 octobre 1976, page 626, no. 103039d, Columbus, Ohio, USA**
**CHEMICAL ABSTRACTS, vol. 82, no. 8, 24 février 1975, page 520, no. 50658j, Columbus, Ohio, USA**

(73) Titulaire: **L.C.C.-C.I.C.E. - COMPAGNIE EUROPEENNE DE COMPOSANTS ELECTRONIQUES, 101, Boulevard Murat, F-75781 Paris Cedex 16 (FR)**

(72) Inventeur: **Lagrange, Alain, THOMSON-CSF SCPI 173, bld Haussmann, F-75379 Paris Cedex 08 (FR)**

(74) Mandataire: **Vesin, Jacques et al, THOMSON-CSF SCPI 173, Bld Haussmann, F-75379 Paris Cedex 08 (FR)**

BUNDESDRUCKEREI BERLIN

## Description

La présente invention concerne une composition céramique diélectrique à base de titanate de baryum ainsi qu'un condensateur haute tension utilisant une telle composition.

Les appareils électriques à usage domestique ou industriel qui fonctionnent sous tension alternative élevée nécessitent une protection des utilisateurs. En particulier, il est important d'éviter que les parties conductrices de ces appareils qui sont accessibles aux utilisateurs puissent à la suite d'un mauvais contact être portées à cette tension élevée. Dans ce but, on utilise notamment des condensateurs présentant simultanément une constante diélectrique élevée, un faible coefficient de température et de tension, ainsi que de faibles pertes diélectriques. On cherche sous le plus faible volume possible, à réaliser des condensateurs ayant une capacité élevée et dont la valeur de celle-ci varie très peu en fonction de la température et de la tension électrique à ses bornes (c'est-à-dire du champ électrique appliqué au diélectrique), puisque le courant qui traverse cette capacité est déterminé en grande partie par la valeur de celle-ci. Il est également nécessaire que les pertes diélectriques de ces condensateurs soient faibles afin d'éviter bien entendu l'échauffement et la détérioration desdits condensateurs.

Le matériau diélectrique recherché pour ce type d'application doit donc être à la fois peu sensible aux variations de champ électrique et posséder une constante diélectrique élevée, ces deux conditions étant généralement contradictoires. En effet, les corps possédant les constantes diélectriques les plus élevées sont les céramiques diélectriques de type II, bien connues de l'homme de l'art. Or, celui-ci sait par ailleurs que ces diélectriques possèdent généralement une sensibilité aux variations du champ électrique d'autant plus élevée que leur constante est élevée. En particulier, les compositions céramiques diélectriques de type II à base de titanate de baryum, si elles possèdent généralement une constante diélectrique relativement élevée, sont également très sensibles aux effets du champ électrique: les variations relatives de capacités des condensateurs réalisés avec ces compositions sont très importantes lorsque la tension d'utilisation desdites capacités augmente.

Il a maintenant été trouvé des compositions céramiques diélectriques à base de titanate de baryum ne comportant pas les inconvénients des compositions mentionnées ci-dessus. Selon l'invention, lesdites compositions sont caractérisées en ce qu'elles comportent de 90 à 95% en poids de titanate de baryum, de 2 à 5% en poids de titanate de bismuth de formule $Bi_2O_3nTiO_2$, avec $n = 1$, 1,5 ou 2, de 1 à 2% en poids de zirconate de calcium et de 1 à 4% en poids d'oxyde de néodyme.

De telles compositions se sont avérées répondre particulièrement bien au problème posé. Elles possèdent en effet une constante diélectrique élevée, un faible coefficient de température, un faible coefficient de tension et de faibles pertes diélectriques. Par ailleurs, on constate que ces compositions possèdent une température de Curie relativement basse variant sensiblement entre 0° C et 20° C, ce qui permet d'utiliser en règle générale ces compositions dans leur état para-électrique c'est-à-dire au-dessus de la température de Curie. On a constaté en effet, que lorsque ces compositions étaient utilisées pour réaliser des condensateurs, ceux-ci avaient des caractéristiques répondant au problème posé du fait que l'on se trouve au voisinage de la température de Curie. En particulier, on sait en effet que la constante diélectrique d'un matériau céramique ferro-électrique est maximale à la température de Curie qui sépare l'état ferro de l'état para-électrique.

De préférence, on utilisera un titanate de bismuth dans lequel le nombre $n$ est égal à 2. C'est en effet dans ces conditions que l'on a constaté que les céramiques obtenues présentaient le meilleur compromis entre les différentes propriétés recherchées.

De préférence, on utilisera de 2 à 3% en poids d'oxyde de néodyme, pour obtenir également le meilleur compromis entre les différentes propriétés recherchées.

Ainsi qu'on le constatera par la suite, certains des matériaux correspondant à la formulation indiquée ci-dessus peuvent présenter dans certains cas, suivant leur géométrie ou les conditions de frittage utilisées, des pertes électriques croissantes avec la température à partir d'environ 70° C. Afin d'éliminer ce phénomène, on introduira de préférence dans la composition selon l'invention un matériau dopant tel que l'oxyde de manganèse, en faible concentration. Généralement, des concentrations inférieures ou égales à 0,1% en poids de la composition totale ci-dessus permettent de supprimer le phénomène de croissance des pertes diélectriques à la température indiquée précédemment.

L'invention concerne également un condensateur céramique haute tension comportant au moins une couche céramique diélectrique telle que décrite ci-dessus revêtue d'armatures métalliques. Compte tenu de l'utilisation habituelle desdits condensateurs, ceux-ci sont génarelement réalisés sous forme de disques. Par conséquent, leur fabrication consiste à réaliser la composition telle que définie ci-dessus dans les conditions bien connues de l'homme de l'art, puis à réaliser des disques de matière céramique à l'aide de cette composition à laquelle on ajoute un liant organique pour faciliter la fabrication, lesdits disques étant ensuite frittés puis revêtus d'armatures métalliques, par exemple, d'une pâte à base d'argent par la technique de la sérigraphie.

L'invention sera mieux comprise à l'aide des exemples de réalisation suivants donnés à titre non limitatif:

Exemples N° 1 à 15

On prépare séparément d'une manière bien connue de l'homme de l'art des chamottes de titanate de baryum, de zirconate de calcium et de titanate de bismuth telles que définies plus haut dans les conditions suivantes:

— Le titanate de baryum est préparé à l'aide d'un mélange en phase aqueuse de carbonate de baryum et d'oxyde de titane, le chamottage ayant lieu à une température comprise entre 1000 et 1300° C et de préférence entre 1100 et 1200° C.

— Le zirconate de calcium est préparé par mélange en phase aqueuse de carbonate de calcium et d'oxyde de zirconium qui subissent ensuite un chamottage à une température comprise entre 1100 et 1300° C et de préférence entre 1210 et 1240° C.

— Le titanate de bismuth est préparé également à partir d'un mélange en phase aqueuse d'oxyde de bismuth et d'oxyde de titane, le chamottage ayant lieu entre 800 et 1000° C et de préférence aux environs de 850° C.

Dans les trois cas, la durée du chamottage sera de l'ordre d'une heure environ.

Les chamottes ainsi réalisées sont ensuite mélangées. On ajoute au mélange de l'oxyde de néodyme dans les proportions mentionnées plus haut et l'on effectue un broyage de l'ensemble en milieu aqueux pendant 24 heures. La barbotine ainsi obtenue est séchée à 100° C environ puis tamisée. Afin de pouvoir réaliser aisément des disques de matière céramique, on mélange la poudre obtenue après tamisage à de l'alcool polyvinylique ou à un latex en solution organique. Les disques sont alors réalisés par pressage puis le liant introduit plus haut est éliminé par traitement thermique sous air à 600° C. On réalise ensuite le frittage de ces disques à des températures comprises entre 1250 et 1300° C, sous atmosphère oxydante (air, par exemple), et pendant une heure environ.

Suivant les proportions des différents constituants introduits dans le mélange des chamottes on obtient les résultats suivants résumés dans le tableau en Annexe, dans lequel:

— $\varepsilon$ représente la constante diélectrique du matériau,
— tangente $\delta \times 10^4$, la tangente de l'angle de perte du matériau diélectrique $\times 10^4$,
— $\theta^\circ$ C, la température de Curie du matériau,
— $\Delta$C/C à 85° C, la variation de capacité des condensateurs réalisés par rapport à la capacité à température ambiante, mesurée de manière habituelle à l'aide d'un signal alternatif de 1 volt et 1 KHz, en l'absence de champ électrique extérieur,
— $T_f^\circ$ C, la température de frittage de la composition.

D'une manière générale, on peut voir d'après ce tableau que les résultats obtenus à l'aide des compositions selon l'invention sont excellents: compte tenu des hautes constantes diélectriques, on constate une très bonne stabilité en température entre +10° C à +85° C. Toutefois, on considèrera que les meilleurs résultats sont obtenus lorsque la variation de capacité $\Delta$C/C est inférieure à —30%, et/ou que la température de Curie est la plus basse possible, c'est-à-dire aux environs de 0° C, et/ou que les pertes diélectriques sont inférieures à 100 et/ou que la valeur de la constante diélectrique est supérieure à 3500.

Dans ces conditions, on peut considérer que, suivant l'application envisagée, les exemples N° 9 et 15 sont particulièrement intéressants.

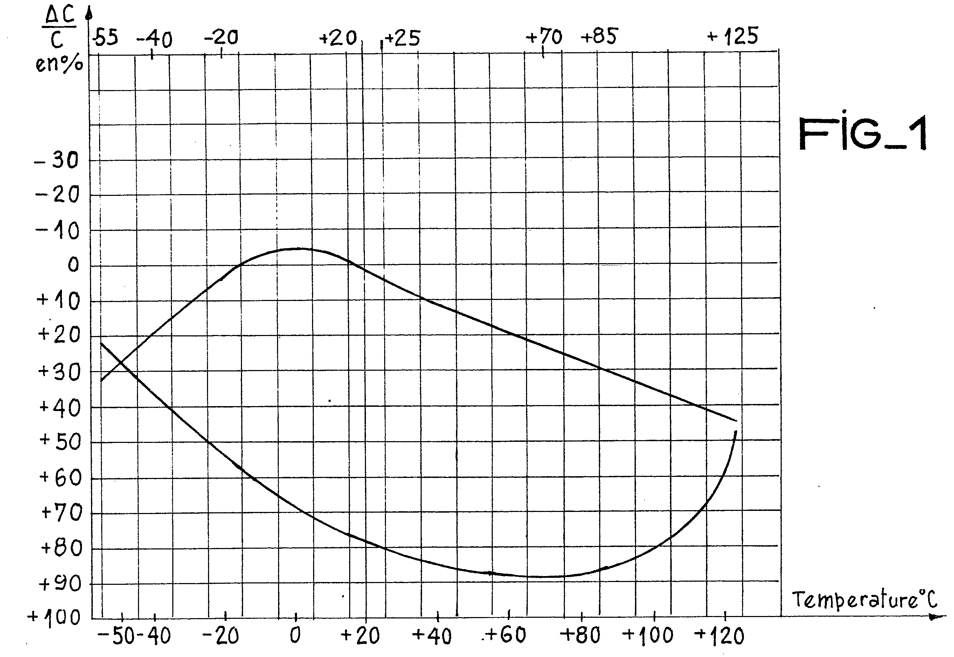

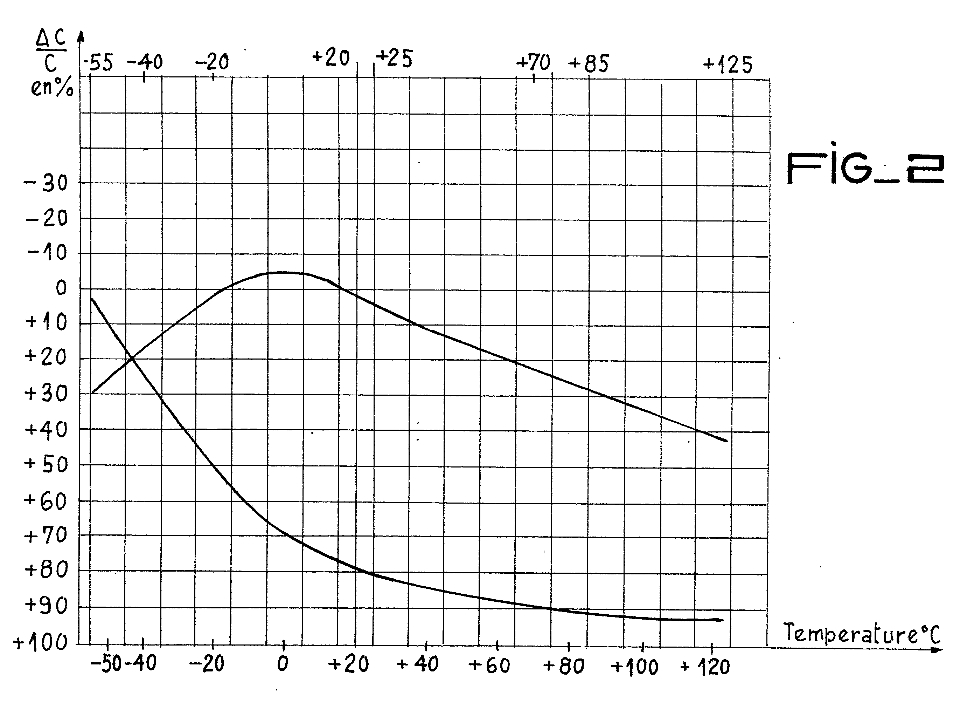

Afin d'illustrer la tenue en température des matériaux diélectriques selon l'invention, on a représenté sur les figures 1 et 2 ci-jointes respectivement les variations relatives de capacité et les variations de la tangente $\delta$ en fonction de la température des matériaux des exemples 3 et 14.

Sur la figure 1, qui représente les variations définies ci-dessus du matériau de l'exemple 3, on constate que la variation relative de capacité des disques réalisés passe par un maximum à la température de Curie qui est ici de 0° C et est située sensiblement à —30% à —55° C et —45% à +125° C. Par ailleurs, la tangente de l'angle de perte dont la valeur à 20° C est égale à $97 \times 10^{-4}$, remonte très nettement non seulement aux environs de —55° C mais également à partir de +70° C environ pour atteindre une valeur relativement élevée à +125° C.

La figure 2 représente les variations des mêmes paramètres que ceux illustrés sur la figure 1 mais pour le matériau de l'exemple 14. Ainsi qu'on peut le constater sur cette figure, les variations relatives de capacités de ce matériau sont sensiblement identiques à celles du matériau de l'exemple 3 de la figure 1 dans la même gamme de température —55° C à +125° C avec un maximum à la température de Curie de l'ordre de 0° C. Par contre, la tangente de l'angle de perte suit une courbe décroissante continuement de —55° C à +125° C. A 20° C, cette tangente de l'angle de perte est de l'ordre de $85 \times 10^{-4}$ et elle atteint une valeur encore moins élevée à +125° C. Par conséquent, un matériau correspondant à la formulation de l'exemple 14 donne des résultats encore améliorés par rapport à celui de l'exemple 3. Ainsi qu'on peut le constater d'après le tableau ci-après en Annexe, le matériau de l'exemple 14 comporte un pourcentage en poids d'oxyde de manganèse égal à 0,01%. D'après la figure 2, il est clair que l'adjonction d'un produit dopant tel que l'oxyde de manganèse ne modifie pas la tenue en température de la valeur de la capacité de condensateur réalisé mais améliore fortement la tenue de ce matériau vis-à-vis des pertes diélectriques lorsque la température augmente.

Annexe

| Exemple N° | BaTiO₃ | Bi₂O₃2TiO₂ | Nd₂O₃ | CaZrO₃ | MnO | $\varepsilon$ | tg$\delta \times 10^4$ | $\theta°$ C | $\Delta$C/C à 85° C | $T_F$ (° C) |
|---|---|---|---|---|---|---|---|---|---|---|
| 1 | 93,85 | 2,5 | 2,25 | 1,4 | 0 | 3800 | 128 | 15 | −28 | 1270 |
| 2 | 93,60 | 2,5 | 2,5 | 1,4 | 0 | 3530 | 115 | 5 | −28 | 1270 |
| 3 | 93,35 | 2,5 | 2,75 | 1,4 | 0 | 3530 | 97 | 0 | −29 | 1270 |
| 4 | 92,8 | 3,3 | 2,5 | 1,4 | 0 | 3565 | 109 | 5 | −24 | 1270 |
| 5 | 92,8 | 3,3 | 2,5 | 1,4 | 0 | 4035 | 134 | 20 | −28 | 1300 |
| 6 | 92,1 | 4 | 2,5 | 1,4 | 0 | 3500 | 93 | 0 | −24 | 1270 |
| 7 | 92,1 | 4 | 2,5 | 1,4 | 0 | 3760 | 98 | 5 | −26 | 1300 |
| 8 | 91,9 | 4,5 | 2,2 | 1,4 | 0 | 3750 | 129 | 20 | −22 | 1300 |
| 9 | 92,1 | 4,5 | 2 | 1,4 | 0 | 3635 | 117 | 15 | −19 | 1300 |
| 10 | 92,0 | 4 | 2,5 | 1,5 | 0 | 3865 | 89 | 5 | −30 | 1300 |
| 11 | 92,7 | 3,3 | 2,5 | 1,5 | 0 | 3915 | 103 | 10 | −27 | 1300 |
| 12 | 92,05 | 4,5 | 2,5 | 1,4 | 0,05 | 4475 | 80 | 15 | −36 | 1300 |
| 13 | 91,5 | 4,5 | 2,5 | 1,4 | 0,1 | 4020 | 60 | 10 | −32 | 1300 |
| 14 | 91,59 | 4,5 | 2,5 | 1,4 | 0,01 | 3875 | 85 | 0 | −28 | 1270 |
| 15 | 91,59 | 4,5 | 2,5 | 1,4 | 0,01 | 4030 | 70 | 0 | −30 | 1300 |

## Revendications

1. Composition céramique diélectrique, caractérisée en ce qu'elle comporte de 90 à 95% en poids de titanate de baryum, de 2 à 5% en poids de titanate de bismuth de formule $Bi_2O_3nTiO_2$ avec n = 1, 1,5 ou 2, de 1 à 2% en poids de zirconate de calcium et de 1 à 4% en poids d'oxyde de néodyme.

2. Composition céramique diélectrique selon la revendication 1, caractérisée en ce que n = 2.

3. Composition céramique diélectrique selon l'une des revendications 1 ou 2, caractérisée en ce qu'elle comporte de 2 à 3% en poids d'oxyde de néodyme.

4. Composition céramique diélectrique selon l'une des revendications 1 à 3, caractérisée en ce qu'elle comporte de plus moins de 0,1% en poids d'oxyde de manganèse.

5. Condensateur céramique haute tension comportant au moins une couche diélectrique revêtue d'armatures métalliques, caractérisé en ce que la couche diélectrique a une composition conforme à l'une des revendications 1 à 4.

## Patentansprüche

1. Dielektrische Keramikzusammensetzung, dadurch gekennzeichnet, daß sie 90 bis 95 Gewichtsprozent Bariumtitanat, 2 bis 5 Gewichtsprozent Wismuttitanat mit der Formel $Bi_2O_3nTiO_2$, worin n = 1, 1,5 oder 2 ist, 1 bis 2 Gewichtsprozent Kalziumzirkanat und 1 bis 4 Gewichtsprozent Neodymoxyd enthält.

2. Dielektrische Keramikzusammensetzung nach Anspruch 1, dadurch gekennzeichnet, daß n = 2 ist.

3. Dielektrische Keramikzusammensetzung nach einem der Ansprüche 1 oder 2, dadurch gekennzeichnet, daß sie 2 bis 3 Gewichtsprozent Neodymoxyd enthält.

4. Dielektrische Keramikzusammensetzung nach einem der Ansprüche 1 bis 3, dadurch gekenn-

**0 068 973**

zeichnet, daß sie weiterhin weniger als 0,1 Gewichtsprozent Manganoxyd enthält.

5. Hochspannungskeramikkapazitanz, die wenigstens eine mit einem Metallbelag belegte Schicht umfaßt, dadurch gekennzeichnet, daß die Schicht eine Zusammensetzung entsprechend einem der Ansprüche 1 bis 4 hat.

**Claims**

1. Dielectric ceramic composition, characterized in that it comprises from 90 to 95% by weight barium titanate, from 2 to 5% by weight bismuth titanate of the formula $Bi_2O_3nTiO_2$ with $n = 1$, 1.5 or 2, from 1 to 2% by weight calcium zirconate and from 1 to 4% by weight neodymium oxide.

2. Dielectric ceramic composition according to claim 1, characterized in that $n = 2$.

3. Dielectric ceramic composition according to one of claims 1 or 2, characterized in that it comprises 2 to 3% by weight neodymium oxide.

4. Dielectric ceramic composition according to one of claims 1 to 3, characterized in that it comprises, furthermore, less than 0.1% by weight manganese oxide.

5. High voltage ceramic condensor comprising at least one dielectric layer covered with metallic frames, characterized in that the dielectric layer has a composition according to one of claims 1 to 4.

FIG_1

FIG_2